# EUROPÄISCHE PATENTSCHRIFT

(11) **EP 1 497 073 B1**
(45) Veröffentlichungstag und Bekanntmachung des Hinweises auf die Patenterteilung: **01.10.2008**
(21) Anmeldenummer: 03727326.5
(22) Anmeldetag: 17.04.2003
(51) Int. Cl.: B23P 19/06, F16B 37/06

(54) **FUNKTIONSELEMENT ZUR ANBRINGUNG AN EIN BLECHTEIL, AUS DIESEN HERGESTELLTES ZUSAMMENBAUTEIL SOWIE VERFAHREN ZUR ANBRINGUNG DES FUNKTIONSELEMENTS AN EIN BLECHTEIL**
FUNCTIONAL ELEMENT FOR ATTACHING TO A SHEET METAL PART, COMPOSITE COMPONENT PRODUCED FROM SAID ELEMENT AND METHOD FOR ATTACHING THE FUNCTIONAL ELEMENT TO A SHEET METAL PART
ELEMENT FONCTIONNEL DESTINE A ETRE FIXE SUR UNE PIECE EN TOLE, COMPOSANT D'ASSEMBLAGE PRODUIT A PARTIR DE CET ELEMENT FONCTIONNEL ET PROCEDE DE FIXATION D'UN ELEMENT FONCTIONNEL A UNE PIECE EN TOLE

(30) Priorität: 19.04.2002 WO PCT/EP02/04365; 21.10.2002 DE 10249030
(43) Veröffentlichungstag der Anmeldung: 19.01.2005
(73) Patentinhaber: Profil Verbindungstechnik GmbH & Co. KG, 61381 Friedrichsdorf (DE)
(72) Erfinder: BABEJ, Jiri, 35423 Lich (DE); HOESSRICH, Wolfgang, 61476 Kronberg (DE)
(74) Vertreter: Manitz, Finsterwald & Partner GbR
(86) Internationale Anmeldenummer: PCT/EP2003/004075
(87) Internationale Veröffentlichungsnummer: WO 2003/089187

(56) Entgegenhaltungen:
- EP-A- 0 540 030
- WO-A-02/086337
- WO-A-03/029667
- DE-A- 3 835 566
- DE-A- 10 119 505

## Beschreibung

Die vorliegende Erfindung betrifft ein Funktionselement zur Anbringung an ein Blechteil, wie beispielsweise Mutterelement oder Bolzenelement mit einem Körperteil bzw. Kopfteil, der an seinem ersten axialen Ende erforderlichenfalls einen kreiszylindrischen Teil aufweist und an seinem anderen axialen Ende in einen zylindrischen Nietabschnitt übergeht nach dem Oberbegriff vom Anspruch 1 sowie ein aus dem Funktionselement und einem Blechteil hergestelltes Zusammenbauteil nach dem Oberbegriff vom Anspruch 17.

Ein Funktionselement der eingangs genannten Art wird von der Firma Profil Verbindungstechnik GmbH & Co. KG, Friedrichsdorf, Deutschland unter der Bezeichnung EMF in der Form eines Mutterelements angeboten. Mit diesem Element kann ein Bauteil auf der dem Ringflansch abgewandten Seite des Blechteils an diesem angebracht werden, und zwar mittels eines Schraubbolzens, der in das Gewinde des Mutterelements eingreift und das Bauteil und das Blechteil gegeneinander verspannt. Das Element wird an ein Blechteil mittels des Verfahrens angebracht, das in der EP-A-0 713 982 im Zusammenhang mit deren Fig. 16 und 17 beschrieben ist, wobei dieses Verfahren für sich in der entsprechenden europäischen Teilanmeldung EP-A-0 922 866 beansprucht ist. Ein Funktionselement der eingangs genannten Art in Form eines Bolzenelements ist ebenfalls bekannt, und zwar in Form des sogenannten SBF Bolzenelements der Firma Profil Verbindungstechnik GmbH & Co. KG, das unter anderem im deutschen Patent 3447006 zusammen mit dem dazugehörigen Anbringungsverfahren beschrieben ist. Sowohl das EMF Element als auch das SBF Element haben sich in der Praxis bewährt. Bei dem EMF Element wird das Blechteil nur unwesentlich verformt und bleibt im Bereich der Anbringung des Funktionselements zumindest im wesentlichen in der gleichen Ebene wie das umliegende Blechmaterial.

Bei dem SBF Bolzen dagegen wird eine gerundete Vertiefung im Blechteil erzeugt und dies führt zu einer relativ steifen Anbindung des Bolzenelementes am Blechteil.

Aufgabe der vorliegenden Erfindung ist es, ein Funktionselement vorzusehen, das eine steife Anbindung am Blechteil sicherstellt, so daß Zug- und Kompressionskräfte sowie Quer- und Scherkräfte über das Element am Blechteil übertragen werden können, wobei die Anbindung auch bei wechselnder Beanspruchung eine lange Lebensdauer aufweisen soll und nicht zu der Ausbildung von Ermüdungsrissen neigt. Weiterhin will die Erfindung ein Zusammenbauteil bestehend aus dem Funktionselement und einem Blechteil schaffen, das entsprechende Eigenschaften aufweist und ein Verfahren zur Anbringung des Funktionselements zur Verfügung stellen, das eine qualitativ hochwertige Anbringung des Funktionselements am Blechteil sicherstellt, ohne besonders aufwendig in der Realisierung zu sein. Darüber hinaus soll das Funktionselement sich als elektrisches Anschlusselement eignen, bspw. in Form eines Massebolzens.

In dieser Anmeldung hat die Bezeichnung "Funktionselement" seine normale Bedeutung, die Beispiele für solche Funktionselemente sind Befestigungselemente wie Mutterelemente oder Bolzenelemente, die die Anbringung eines weiteren Bauteils an einem Blechteil ermöglichen. Die Bezeichnung umfaßt aber auch alle Arten von Hohlelementen, die beispielsweise zur Aufnahme von eingesteckten Teilen oder als drehbare Lagerung für eine Welle dienen, wie auch alle Elemente, die mit einem Schaftteil versehen sind, beispielsweise zur Aufnahme von einem Klip oder zur drehbaren Lagerung eines hohlen Teiles.

Zur Lösung der Aufgabe wird erfindungsgemäß ein Funktionselement der eingangs genannten Art vorgesehen, daß sich dadurch auszeichnet, dass der Körperteil im Bereich zwischen dem ersten axialen Ende bzw. einem etwaigen dort vorgesehenen kreiszylindrischen Teil und dem Nietabschnitt mit einem zumindest im Wesentlichen konusförmigen Bereich versehen ist, der eine Anlagefläche für einen entsprechenden konusförmigen Bereich eines Blechteils bildet und dass der kreiszylindrische Teil, falls vorhanden, an der Grenze zum konusförmigen Bereich einen Durchmesser aufweist, der nicht größer ist als der maximale Durchmesser des konusförmigen Bereichs und somit einen Ringflansch dort nicht bildet.

Ein entsprechendes Zusammenbauteil zeichnet sich dadurch aus, daß dass der Körperteil im Bereich zwischen dem ersten axialen Ende bzw. einem etwaigen dort vorgesehenen kreiszylindrischen Teil und dem Nietabschnitt mit einem zumindest im Wesentlichen konusförmigen Bereich versehen ist, der eine Anlagefläche für einen entsprechenden konusförmigen Bereich eines Blechteils bildet und dass der kreiszylindrische Teil, falls vorhanden, an der Grenze zum konusförmigen Bereich einen Durchmesser aufweist, der nicht größer ist als der maximale Durchmesser des konusförmigen Bereichs und somit einen Ringflansch dort nicht bildet,
wobei ein konusförmiger Bereich des Blechteils in einem aus dem Nietabschnitt gebildeten Ringwulst eingeklemmt ist und dass der konusförmige Bereich des Blechteils zumindest im Wesentlichen vollflächig am konusförmigen Bereich des Funktionselements anliegt.

Diese Ausführung des Funktionselements bzw. des mit dem Funktionselement gebildeten Zusammenbauteils führt daher zu einer Ausbildung wonach der konusförmige Bereich des Blechteils sich zumindest im wesentlichen vollflächig an den konusförmigen Bereich des Körperteils des Funktionselementes anliegt. Diese Konstruktion schafft eine besonders steife und feste Anbringung des Funktionselements am Blechteil und löst somit die oben angegebene Aufgabenstellung.

Diese vollflächige Anlage führt dazu, dass relative Bewegungen zwischen dem Blechteil und dem Element weitestgehend ausgeschlossen sind. Auch dies erhöht die Steifigkeit der Verbindung und hilft die Ausbildung von Ermüdungsrissen zu vermeiden.

Besonders günstig ist es, wenn Verdrehsicherungsmerkmale im Bereich der konusförmigen Fläche vorgesehen sind, da das Blechmaterial im Eingriff mit diesen Verdrehsicherungsmerkmalen gebracht werden kann, wodurch die Verdrehsicherung erreicht ist, ohne die Steifigkeit der Verbindung herabzusetzen. Die Verdrehsicherungsmerkmale können beispielsweise mit Vorteil die Form von Nasen und/oder Vertiefungen aufweisen.

Die axiale Länge der konusförmigen Fläche soll mindestens in etwa der doppelten Bleckdicke, vorzugsweise etwa der vierfachen Blechdicke entsprechen. Eine Abmessung dieser Art stellt sicher, daß der konusförmige Bereich ausreichend lang ist, um die erwünschte Steifigkeit zu erzielen.

Der eingeschlossene Konuswinkel der konusförmigen Fläche liegt vorzugsweise im Bereich zwischen 60° und 150°. Besonders bevorzugt ist ein eingeschlossener Konuswinkel im Bereich zwischen 70° und 140° und insbesondere ein Konuswinkel von 75° bis 115°. Ein eingeschlossener Konuswinkel von etwa 90° gilt als besonders bevorzugt.

Besonders günstig ist es, wenn die konusförmige Fläche über einen zylindrischen Halsteil in den Nietabschnitt übergeht. Dieser Halsteil wird bei der Umformung des Materials des Funktionselements im Bereich des Nietabschnittes im Wesentlichen nicht verformt und bildet einen Teil der klemmenden Aufnahme für das Blechmaterial im Bereich des Randes des in diesem vorgesehenen Loches. Der Halsteil kann mit Vorteil eine axiale Länge aufweisen, welche in etwa der Blechdicke entspricht und vorzugsweise etwas größer als diese ist.

Die axiale Höhe des kreiszylindrischen Teils kann bis auf null reduziert werden, so das die Stirnfläche des konusförmigen Bereichs mit dem größten Durchmesser an der dem Nietbördel abgewandten Oberfläche des Blechteils zu liegen kommt, oder etwas höher oder tiefer als diese Oberfläche liegt.

Die Möglichkeit besteht aber auch, die axiale Dicke des kreiszylindrischen Teils deutlich größer als die Dicke des Blechteils zu machen, an dem das Element zu befestigen ist. In diesem Falle steht die dem Blechteil abgewandte Stirnseite des kreiszylindrischen Teils deutlich vor der entsprechenden Oberseite des Blechteils vor und kann beispielsweise zur Realisierung einer Abstandsfunktion ausgenützt werden. In beiden Fällen kann die Konusfläche im Bereich der dem Nietbördel abgewandten Seite des Blechteils mit einem relativ großen Durchmesser ausgestattet werden, so daß insgesamt eine große Auflagefläche zwischen dem Funktionselement und dem Blechteil gegeben ist, wodurch eine günstige Flächenpressung erreicht und die Übertragung von Kräften über das Funktionselement in das Blechteil begünstigt werden kann. Besonders bevorzugte Ausführungsformen des Funktionselements sowie des Zusammenbauteils sind den Unteransprüchen zu entnehmen.

Die Anbringung des Funktionselementes an einBlechteil kann unter anderem mit einem Verfahren erfolgen, das an sich im wesentlichen aus dem deutschen Patent 3447006 bekannt ist, wobei die Form der Matrize der besonderen Form des Blechteils bzw. Funktionselements anzupassen ist.

Die Erfindung wird nachfolgend näher erläutert, anhand von Ausführungsbeispielen unter Bezugnahme auf der Zeichnungen, welche zeigen:
- Fig. 1: ein teilweise in axialer Richtung geschnittenes Funktionselement in Form eines Mutterelements,

- Fig. 2: eine schematische Darstellung eines Blechteils, das zur Aufnahme des Funktionselements der Fig. 1 vorbereitet ist,
- Fig. 3: ein Zusammenbauteil, das aus dem Funktionselement der Fig. 1 und dem Blechteil der Fig. 2 gebildet ist,
- Fig. 4: eine Seitenansicht eines teilweise in Längsrichtung geschnittenes Funktionselements in Form eines Bolzenelements,
- Fig. 5: eine Stirnansicht des Bolzenelements der Fig. 4 entsprechend der Pfeilrichtung V der Fig. 4,
- Fig. 6: eine perspektivische Darstellung des Bolzenelements der Fig. 4 und 5,
- Fig. 7: eine Zeichnung ähnlich der Fig. 6 des gleichen Gegenstands, jedoch zu einem anderen Maßstab und mit einer Schnittebene, die durch eine Verdrehsicherungsnase verläuft,
- Fig. 8: eine Darstellung des Bolzenelements der Figuren 4 bis 7 in der Ansicht der Fig. 7, jedoch mit einem auf das Schaftteil 128 aufgeschraubten Mutterelements, insbesondere zur Ausbildung eines elektrischen Anschlussbolzens,
- Fig. 9: eine Stirnansicht der Bolzen- und Mutterkombination der Fig. 8 in Pfeilrichtung IX der Fig. 8 gesehen und
- Fig. 10: eine teilweise geschnittene Darstellung eines Zusammenbauteils, das aus dem Bolzenelement der Fig. 8 und einem Blechteil gebildet ist.

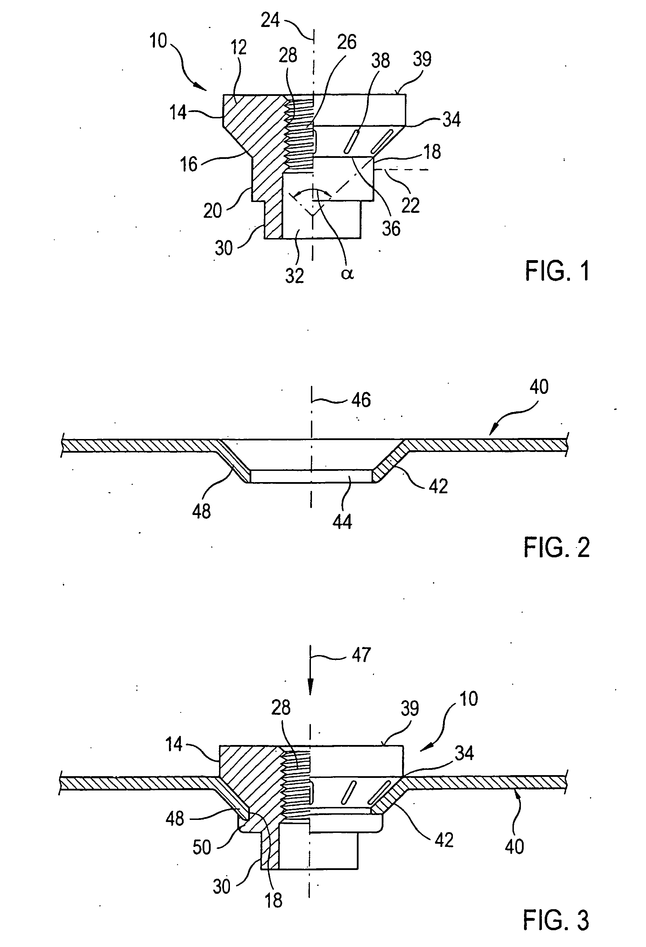

Die Fig. 1 zeigt ein Funktionselement 10 mit einem einstückigem Körperteil 12, das keinen Ringflansch aufweist, sondern eine konusförmige Fläche 16, die ohne Ringflansch in einen kreiszylindrischen Teil 14 übergeht, dessen Durchmesser zumindest im wesentlichen dem maximalen Durchmesser der konusförmigen Fläche 16 entspricht. Es kann im Bereich der Grenze zwischen der konusförmigen Fläche 16 und dem kreiszylindrischen Teil 14 sowie am Übergang vom kreiszylindrischen Teil 14 und dessen freier Stirnfläche 39 kaltschlagtechnisch bedingte gerundete Übergänge geben. Ferner weist das gezeigte Funktionselement 10 einen Halsteil 18 auf, der in einen Nietabschnitt 20 übergeht. Die Grenze zwischen dem Halsteil 18 und dem Nietabschnitt 20 liegt bei 22. Der Körper 16 des Funktionselements 10 weist außerdem eine konzentrisch zur Längsachse 24 angeordnete Bohrung 26 mit einem Gewindezylinder 28 auf. Am unteren Ende des Nietabschnitts 20 in Fig. 1 geht dieser in eine zylindrische Fortsetzung 30 über, die als zum Nietabschnitt 20 gehörig gedacht werden kann. Die Bohrung 28 des Mutterelementes 10 weist im Bereich der zylindrischen Fortsetzung 30 einen Bereich 32 auf mit einem Durchmesser, der geringfügig größer ist als der Grunddurchmesser des Gewindezylinders 28.

Die konusförmige Fläche 16 erstreckt sich konkret zwischen der Grenze zum kreiszylindrischen Teil 14 des Funktionselements bis zu der Grenze 36 zum Halsteil 18 und weist einen Konuswinkel α von in diesem Beispiel 90° auf. Es soll betont werden, dass der kreiszylindrische Teil im Prinzip eine beliebige Länge in axialer Richtung 24 haben kann, wobei der kreiszylindrische Teil auch vollständig fehlen kann, so dass die Stirnseite 39 des Funktionselements an der Stelle des maximalen Durchmessers der konusförmigen Fläche 16 liegt, d.h. bei 34 in Fig. 1 und 3.

Auch kann der kreiszylindrische Teil 14 einen Durchmesser aufweisen, der deutlich kleiner ist als der maximale Durchmesser der konusförmigen Fläche 16, so dass eine Stufe an der Grenze 34 in Fig. 1 und 3 vorliegt. Auch könnte der Teil 14 als ein von der Grenze 34 in Richtung von der konusförmigen Fläche 16 weg sich verjüngender Teil ausgebildet werden.

Der kreiszylindrische Teil könnte, falls erwünscht, eine andere Umfangsform aufweisen. Bspw. könnte er in Draufsicht eine polygonale oder genutete Form aufweisen oder konisch divergierend oder verjungend oder abgestuft ausgebildet sein. Wichtig ist, dass er an der Grenzfläche zum konusförmigen Bereich keine Abmessung aufweist, die großer ist als der größte Durchmesser des konusförmigen Bereichs und somit einen Ringflansch dort nicht bildet. Wenn er konisch divergierend ausgebildet ist, muss der eingeschlossener Konuswinkel kleiner sein als der des konusförmigen Bereichs und es darf, egal welche Form er hat, kein ausgedehnter Bereich sich am Blechteil abstützen und als Flanschteil dienen. Es dürfte höchstens einige Ecken sich im Blechteil eingraben und als Verdrehsicherung dienen, wobei auch eine solche Konstruktion eher unerwünscht ist. Bei der Auslegung des Begriffs "kreiszylindrischen Teils" sind diese Aussagen zu berücksichtigen, bzw ist dieser Begriff entsprechend auszulegen.

Gleichmäßig verteilt um die konusförmige Fläche herum befinden sich Verdrehsicherungsmerkmale 38, die hier die Form von Nasen aufweisen, die sich jeweils in axiale Ebenen des Elementes erstrecken. Es sind hier acht solche Verdrehsicherungsnasen 38 vorgesehen, es könnten aber auch mehr oder weniger sein. Die Verdrehsicherungsnasen könnten auch die Form von Vertiefungen haben oder es können Verdrehsicherungsnasen und Verdrehsicherungsvertiefungen vorgesehen werden, bspw. abwechselnd um die konusförmige Fläche herum.

Die Fig. 2 zeigt ein Blechteil 40, das zur Aufnahme des Funktionselements 10 der Fig. 1 vorbereitet ist. Konkret weist das Blechteil 40 eine konusförmige Vertiefung 42 mit einem Loch 44 im Bodenbereich der konusförmigen Vertiefung auf. Der Konuswinkel des konusförmigen Bereiches 42 des Blechteils 40 entspricht vorzugsweise dem Konuswinkel α der konusförmigen Fläche 16 des Funktionselements 10. Das Loch 44 weist einen Durchmesser auf, der dem Durchmesser des Halsteils 18 des Funktionselements 10 der Fig. 1 entspricht, wobei das Loch 44 auch einen etwas größeren Durchmesser aufweisen kann, beispielsweise im Bereich von 0,2 mm größer, um eine leichte Einführung des Funktionselements in das Loch zu ermöglichen. Es wäre auch denkbar, das Loch 44 geringfügig kleiner zu machen als den Durchmesser des Halsteils 18, wodurch durch Einführung des Halsteils 18 durch das Loch 44 dieses leicht aufgeweitet wird. Die konusförmige Form der Vertiefung 42 erleichtert auf jeden Fall die Ausrichtung des Funktionselements 10 mit dem Blechteil bei Einführung des Funktionselements. Die Achse 46 des Loches 44 flüchtet dabei mit der Längsachse 24 des Funktionselements 10.

Die Blechvorbereitung erfolgt üblicherweise in einer Stanzpresse oder in einer Station eines Folgeverbundwerkzeuges. In einer weiteren Presse (oder in der gleichen Presse) bzw. in einer weiteren Station eines Folgeverbundwerkzeuges wird das Funktionselement 10 dann unter Anwendung eines Setzkopfes in das Blechteil 40 eingebracht und an diesem angebracht, wobei das sich ergebende Zusammenbauteil in Fig. 3 dargestellt ist und nachfolgend näher erläutert wird. Es soll kurz zum Ausdruck gebracht werden, daß die Anbringung von Funktionselementen an Blechteilen in Pressen und in Folgeverbundwerkzeugen oder unter Anwendung von Robotern oder besonderen Gestelleinrichtungen an sich gut bekannt ist und hier nicht im Detail erläutert wird.

Die Zusammenbausituation gemäß Fig. 3 läßt erkennen, daß ein Ringwulst 50 aus dem Nietabschnitt 20 des Funktionselementes durch Verschiebung von Material des Nietabschnitts in Richtung auf den Ringflansch 14 zu gebildet ist. Dieser Ringwulst 50 bildet zusammen mit dem Halsteil 18, der bei der Verschiebung des Materials des Nietabschnitts zur Bildung des Ringwulstes 50 nur leicht verformt wird, eine klemmende Aufnahme für den Randbereich 48 des Loches 44 des Blechteils 40 und sorgt für einen entsprechenden Anpresswiderstand entgegengesetzt zur Pfeilrichtung 47 in Fig. 3. Der konusförmige Bereich des Blechteils 40 benachbart zur konusförmigen Fläche 16 sorgt für einen entsprechenden Anpresswiderstand. Obwohl hier nicht gezeigt, erfolgt hier die Verschiebung des Materials des Nietabschnitts in Richtung auf den Ringflansch 14 zu in einer Matrize, die eine konusförmige Vertiefung aufweist, die in Anlage gegen die Außenseite des konusförmigen Bereiches 42 des Blechteils gelangt, so daß das Blechmaterial gleichzeitig radial nach innen gedrückt wird, wodurch es zu einem formschlüssigen Eingriff zwischen dem Blechmaterial im konusförmigen Bereich 42 und den Verdrehsicherungsmerkmalen 38 kommt.

Bei der Verschiebung des Materials aus dem Bereich des Nietabschnitts auf den Ringflansch zu, wird von oben in Pfeilrichtung 47 auf die Stirnseite 39 des Funktionselements 10 gedrückt. Da relativ viel Material im Körperteil 12 des Funktionselements zwischen der Stirnseite 39 und dem Nietabschnitt vorhanden ist, wird dieser Bereich des Funktionselements nicht verformt, so daß eine Verformung des Gewindezylinders 28 nicht zu befürchten ist. Auch die zylindrische Fortsetzung 30 des Nietabschnitts wird bei der Anbringung des Funktionselements nicht verformt, sondern lediglich in eine Bohrung der (nicht gezeigten) Matrize geführt. Bei der Anbringung des Funktionselements am Blechteil kann am Setzkopf ein ringförmiger Niederhalter zur Anwendung gelangen, der um den zylindrischen Teil 14 herum angeordnet ist und das Blechteil benachbart zur konusförmigen Vertiefung 48 gegen eine plane Ringfläche an der Stirnseite der verwendeten Matrize drückt, wobei diese Ringfläche parallel zum Blechteil 40 in dem bereich um die konusförmige Vertiefung 42 herum verläuft. Auch ist es möglich, ohne einen Niederhalter zu arbeiten oder, falls vorhanden, den kreiszylindrischen Teil 14 in einer Ausnehmung am freien Ende eines Stößels eines Setzkopfs aufzunehmen, so dass die Stirnseite des Stößels nach dem Einpressen des Funktionselements bündig mit der dem Nietbördel abgewandten Seite des Blechteils liegt und somit als Niederhalter funktioniert bzw. das Blechteil um die konusförmige Vertiefung herum flach presst.

Das Zusammenbauteil gemäß Fig. 3 hat unter anderem den Vorteil, daß ein weiteres Bauteil auf der einen oder anderen Seite angebracht werden kann. Beispielsweise kann ein Bauteil auf der Stirnseite 39 befestigt werden, in diesem Fall mittels eines Bolzens, der von oben kommend in Fig. 3 in den Gewindezylinder 28 eingeschraubt wird. Durch die konusförmige Ausbildung des Bereiches 42 des Blechteils und die Ausbildung des Ringwulstes 50 ist die Anbringung des Funktionselements am Blechteil so fest bzw. steif, daß die Anbringung eines Bauteils an diese Stirnseite 39 ohne weiteres zulässig ist. Dabei kann die Höhe des kreiszylindrischen Teils 14, d.h. die axiale Dicke dieses Teils gewählt werden, um eine Abstandsfunktion zwischen dem weiteren Bauteil und dem Blechteil 40 zu gewährleisten. Beim Fortlassen des konusförmigen Teils kann die Stirnseite 39 bündig mit der oberen Seite des Blechteils 40 oder höher oder tiefer als diese liegen.

Es besteht aber auch die Möglichkeit ein Bauteil auf der unteren Seite des Blechteils 40 in Fig. 3 anzubringen. In diesem Falle wäre der Bolzen von unten in den Gewindezylinder 28 einzuführen. Das Bauteil könnte sich auf der Unterseite des Blechteils gegenüber dem konusförmigen Teil 16 des Funktionselements 10 abstützen oder an der Unterseite des Ringwulstes 50 oder bei geeigneter Dimensionierung der zylindrischen Fortsetzung 30 an der freien Stirnseite dieser Fortsetzung. Auch könnte die zylindrische Fortsetzung 30 als Lagefläche für ein drehbares Teil dienen, das ebenfalls mit einem Bolzen gesichert wird, der von unten kommend in den Gewindezylinder 28 eingeführt wird.

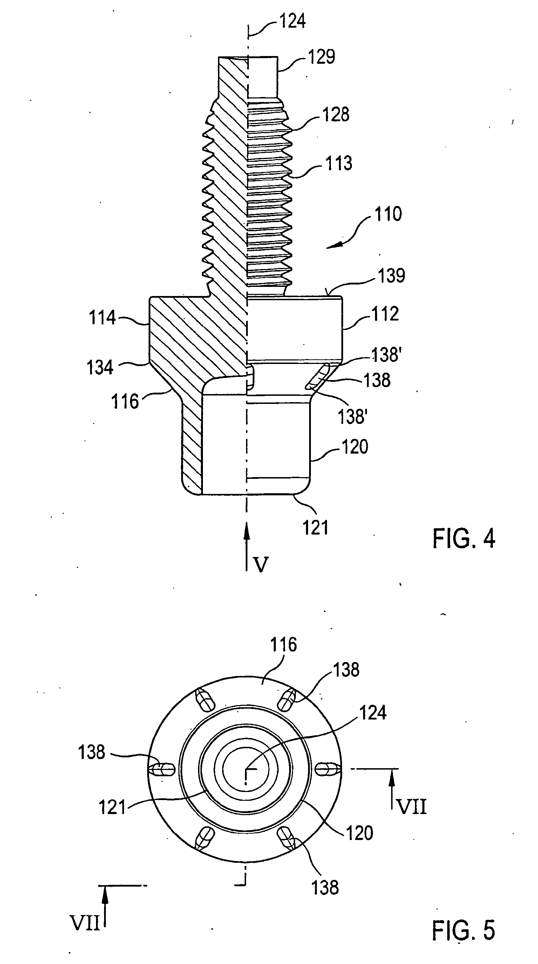

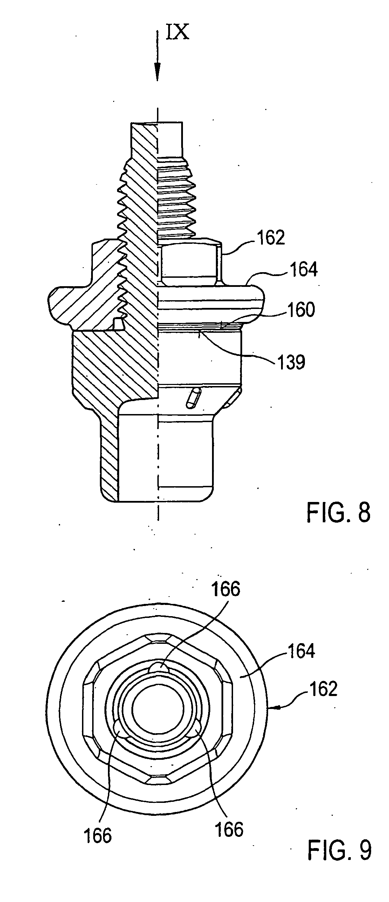

Die Fig. 4 bis 10 zeigen ein weiteres Beispiel eines erfindungsgemäßen Funktionselements hier in Form eines Bolzenelements.

Für die nachfolgende Beschreibung werden für Teile, die die gleiche Form oder Funktion aufweisen wie bei dem Mutterelement gemäß Fig. 1 bis 3 die gleichen Bezugszeichen verwendet, jedoch mit der Grundzahl 100 erhöht. Es kann davon ausgegangen werden, daß die bisherige Beschreibung auch für die entsprechend gekennzeichneten Teile der Ausführungsform gemäß Fig. 4 bis 9 gilt, es sei denn, etwas Gegenteiliges wird gesagt.

Das Bolzenelement 110 weist einen Kopfteil oder Körperteil 112 auf, der zumindest im wesentlichen dem Körperteil 12 des Mutterelementes der Fig. 1 entspricht und das Bolzenelement hat außerdem einen Schaftteil 113, der sich von der Oberseite 139 des kreiszylindrischen Teils 114 weg erstreckt. Der Schaftteil 113 trägt einen Gewindezylinder 128 und endet in einem Einführzapfen 129, beispielsweise nach EN ISO 4753.

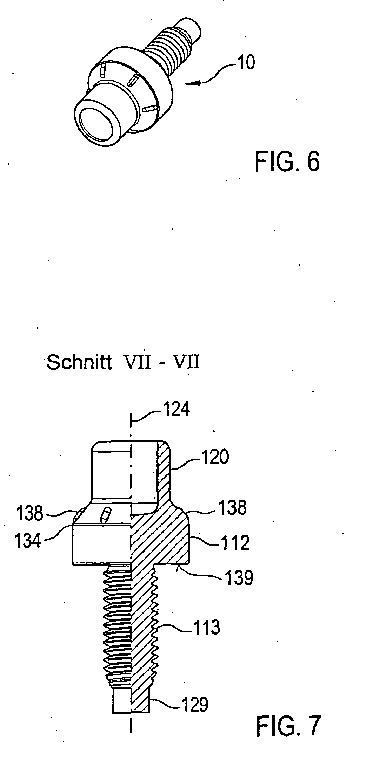

Der kreiszylindrische Teil 114 geht in diesem Beispiel über einen ringförmigen Übergang 134 in eine konusförmige Anlagefläche 116 über, die unmittelbar in einen Nietabschnitt 120 übergeht, der hier an seinem unteren Ende 121 mit Stanz- und Nietmerkmalen ausgestattet ist, die im Prinzip identisch mit den Stanz- und Nietmerkmalen eines herkömmlichen SBF-Bolzens sein können, der aber vorzugsweise die Form hat, die in der DE-Patentanmeldung 101470076.2. D.h., man kann sich das Bolzenelement gemäß Fig. 4 bis 7 so vorstellen, daß jetzt kein Halsteil vorgesehen ist, was grundsätzlich auch bei der Ausbildung des Funktionselements gemäß Fig. 1 bis 3 möglich ist. Andererseits wird der obere Bereich 118 des Stanz- und Nietabschnitts 120 hier zumindest im wesentlichen nicht verformt, wie aus Fig. 7 hervorgeht, so daß dieser Bereich ggf. als Halsteil bezeichnet werden könnte.

Ähnlich wie bei der Ausführungsform gemäß Fig. 1 bis 3 sind hier Verdrehsicherungsmerkmale 138 vorgesehen, die hier die Form von Nasen aufweisen. Auch wäre es möglich, die Verdrehsicherungsnasen 138 gemäß Fig. 4 bis 10 mit Verdrehsicherungsvertiefungen zu ersetzen, die die gleiche Form haben könnten wie die gezeigten Nasen, sich jedoch anstatt als Erhebungen als Ausnehmungen in der konusförmigen Fläche 116 darstellen.

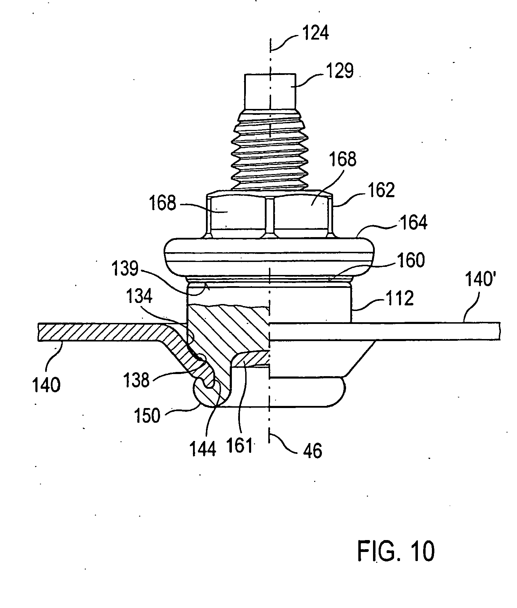

Man merkt aus Fig. 10, dass die obere Stirnseite 139 des Kopfteils 112 des Bolzenelementes deutlich vor der Ebene der Oberseite 140' des Blechteils 140 liegt.

Dies ist insbesondere von Vorteil, wenn, wie hier, das Funktionselement als Massebolzen gedacht ist, wobei eine oder mehrere Ösen oder Gabeln von Strom leitenden Kabeln zwischen der unteren Stirnseite 160 der Mutter 162 in Fig. 10 und der Stirnseite 139 eingeklemmt werden (nicht gezeigt).

Es stellt eine Besonderheit des Massebolzens der Fig. 4 bis 10 dar, dass er mit aufgeschraubter Mutter 162 in das Blechteil selbsstanzend eingebracht wird, unter Anwendung des Verfahrens, das in der vorerwähnten Patentschrift 34 47 006 beschrieben ist, wobei der Stößel des Setzkopfs auf die Ringfläche 164 des Mutterelements drückt. Das Mutterelement wird vor der Anbringung des Bolzenelements an diesem angeschraubt und festgezogen, so dass beim anschließenden Lackieren des Zusammenbauteils, bestehend aus dem Blechteil 140 und der Bolzen-/Mutterkombination 110, 162 oder bei der Anbringung einer anderen Schutzbeschichtung, der Lack bzw. die Schutzbeschichtung das Gewinde im Bereich zwischen dem Mutterelement und dem Bolzenelement nicht kontaminieren und daher in diesem Bereich nicht zu einem erhöhten elektrischen Widerstand führen kann. Der Schlüssel zum Anziehen des Mutterelements 162 greift an die Werkzeugsangriffsflächen 168 an.

Ferner ist der Außendurchmesser der Stirnseite 160 des Mutterelements 162 geringfügig größer ausgebildet als der der Stirnfläche 139 des Bolzenelements. Hierdurch wird sichergestellt, dass kein Lack oder eine andere Schutzbeschichtung die Stirnseite 139 kontaminieren kann, so dass bei Anbringung eines Kabelschuhs dieser stets satt an der Fläche 139 anliegt und hier ein qualitativ hochwertiger elektrischer Übergang stattfindet. Wäre der Durchmesser der Stirnseite 160 kleiner als der Durchmesser der Stirnfläche 139, bestünde die Gefahr, dass eine Lackablagerung am Außenumfang der Stirnfläche 139 verhindern könnte, dass der Kabelschuh satt an dieser Stirnfläche anliegt.

Das Mutterelement kann an Stellen wie 166 verprägt sein, damit beim Transport der aus dem Bolzen- und Mutterelement 110, 162 bestehenden Einheit das Mutterelement 162 nicht verloren geht.

Ein derartiger Schutz kann auch anderweitig erzielt werden. Beispielsweise kann die Steigung des Gewindes des Mutterelements geringfügig anders gewählt werden al die Steigung des Gewindes der Bolzenelements. Es reicht aber auch, das Mutterelement fest anzuziehen, wenn die Flächen 160 und 139 satt aneinander anliegen.

Nach der Herstellung des Zusammenbauteils, bestehend aus dem Blechteil 160, dem Bolzenelement 110 und dem Mutterelement 162, und gegebenenfalls nach Einbau des Zusammenbauteils in eine Karosserie und anschließender Lackierung, wird das Mutterelements gelockert oder gegebenenfalls abgeschraubt, um einen Kabelschuh oder mehrere Kabelschuhe oder einen Flansch eines leitfähigen Gehäuses oder ähnliches zwischen der Stirnseite 160 des Mutterelements 162 und der Stirnseite 139 festzuklemmen und den erforderlichen leitfähigen Übergang zum Bolzenelement 110 und von dem zum Blechteil 140 zu schaffen. Fall erwünscht, kann am Teil 114 an oder auf dessen Stirnseite 139 einen Formvorsprung mit einem besonderen Profil vorgesehen werden, um ein Verdrehen eines eine Form angepasste Öffnung aufweisenden Kabelschuhs gegenüber dem Bolzenelement zu verhindern. Beim Vorsehen eines solchen Vorsprungs wird der Kabelschuh zwischen der Stirnseite 160 des Mutterelements und der Stirnseite des Vorsprungs geklemmt, die Form des Vorsprungs und die der Öffnung des Kabelschuhs verhindert ein gegenseitiges Verdrehen dieser Bestandteile.

Obwohl bei einem Massebolzen die Stirnseite 139 des Kopfteils 112 einen deutlichen Abstand zur Oberseite des Blechteils, d.h. zur Seite des Blechteils, die dem Nietbördel 150 abgewandt ist, haben soll, ist dies bei anderen Bolzenelementen nicht zwingend erforderlich. Die Stirnseite 139 kann nämlich gegenüber der Oberseite des Blechteils deutlich zurückversetzt sein, d.h. deutlich unterhalb der Blechoberseite liegen, und zwar gegebenenfalls um mehr als die Blechdicke, obwohl dies normalerweise nicht erwünscht ist. Üblicherweise wäre der gewünschte Zustand, dass die Stirnseite 139 mit der Oberseite des Blechteils 140 um die konusförmige Vertiefung herum fluchtet, da dieser Zustand das Anschrauben eines weiteren Bauteils begünstigt. Die oben gemachten Äußerungen gelten ebenfalls für das Mutterelement gemäß Figuren 1 und 3.

Da das Bolzenelement der Fig. 4 bis 10 selbststanzend in das Blechteil eingebracht wird, unter Anwendung des Verfahrens gemäß dem deutschen Patent 3447006, wird der Nietabschnitt 120 nach dem Durchstanzen des Blechteils 140 mittels einer entsprechenden Umformfläche der verwendeten Matrize so umgebördelt, dass er die gerundete Form 150 annimmt, die in Fig. 10 gezeigt ist. Dabei wird auch das Blechteil so verformt, wie ebenfalls aus Fig. 10 ersichtlich ist. Beim Durchstanzen des Blechteils entsteht ein Stanzbutzen 160, der, wie im oben genannten deutschen Patent beschrieben, innerhalb der zylindrischen Ausnehmung 132 im Nietabschnitt 120 festgeklemmt wird, wodurch einerseits die Problematik der Entfernung des Stanzbutzens 160 entfällt und andererseits eine erhöhte Steifigkeit im Bereich des Kopfteils 112 erreicht wird. Die konusförmige Vertiefung 142 im Blechteil 140 entsteht während des Ausstanzens des Stanzbutzens in der entsprechend geformter Matrize, wie in der Patentschrift 3447006 zu lesen ist.

Das Blechmaterial 148 aus dem Randbereich der durchstanzten Öffnung wird hier klemmend im umgebördelten Nietabschnitt 120 aufgenommen. Wenn die Stirnseite 139 des Kopfteils 112 des Bolzenelements 110 bündig mit der Oberseite des Blechteils oder zu dieser geringfügig zurückversetzt ist, wird beim Anschrauben eines weiteren Bauteils, das plan an der Stirnseite 139 und an der umliegenden Blechmatrize anliegt, eine kompressive Spannung im konusförmigen Bereich 142 zwischen der Oberseite des Blechteils und der vom Nietabschnitt 120 gegebenenfalls gemeinsam mit dem "Halsteil" 118 gebildeten klemmenden Aufnahme für den Randbereich 148 des Stanzloches gebildet.

Obwohl die Ausbildung des Nietabschnittes 120 des Bolzenelementes gemäß Fig. 4 bis 10 entsprechend dem Nietabschnitt eines SBF-Bolzens oder eines verbesserten SBF-Bolzens (DE 10147076.2) ausgeführt wurde, ist dies nicht zwingend erforderlich. Man könnte z.B. die Ausbildung dieses Bereiches entsprechend der Ausbildung des Nietabschnitts 20 des Funktionselementes gemäß Fig. 1 bis 3 ausbilden und das Bolzenelement gemäß Fig. 4 bis 10 mit dem gleichen Verfahren am Blechteil 40 anbringen, das im Zusammenhang mit Fig. 1 bis 3 beschrieben wurde. Ebenfalls bestünde die Möglichkeit, das Funktionselement gemäß Fig. 1 bis 3 mit einem zylindrischen Nietabschnitt entsprechend dem Nietabschnitt 120 des Bolzenelements gemäß Fig. 4 bis 10 zu versehen und das Mutterelement entweder selbststanzend oder unter Anwendung eines an sich bekannten vorlaufenden Lochstempels im Blechteil anzubringen.

Die gerundeten Enden 138' der Verdrehsicherungsnasen 138 stellen sicher, dass das Blechteil beim Einstanzen nicht unzulässig eingerissen wird, so dass Ermüdungsrisse im Blechteil an den Stellen der Verdrehsicherungsnasen bzw. an den Stellen der radialen Vorsprünge 150' zu befürchten sind.

Obwohl das Bolzenelement 110 der Fig. 4 bis 10 selbststanzend eingebracht wird, kann das Element genauso in ein vorgelochtes Bauteil eingesetzt werden, falls dies erwünscht ist.

Ein Vorteil des erfindungsgemäßen Funktionselements liegt darin, dass mit einem Element ein breiter Bereich von Blechteildicken abgedeckt werden kann, so dass beispielsweise das Funktionselement nach den Figuren 1 bis 10 mit Blechteilen mit Dicken im Bereich von 0.6 mm bis 3 mm oder sogar bis 4 mm verwendet werden kann, wobei diese Dickenangaben nicht einschränkend zu verstehen sind und auch nicht auf die Ausführungen gemäß Fig. 1 bis 10 beschränkt sind.

Die hier beschriebenen Funktionselemente können zum Beispiel aus allen Materialien hergestellt werden, die die Festigkeitsklasse 5.6 oder höher erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Funktionselement (10; 110) zur Anbringung an ein Blechteil, wie beispielsweise ein Mutterelement (10) oder ein Bolzenelement (110) mit einem Körperteil (12;112) bzw. Kopfteil, der an seinem ersten axialen Ende erforderlichenfalls einen kreiszylindrischen Teil (14;114) aufweist und an seinem anderen axialen Ende in einen zylindrischen Nietabschnitt (20; 120) übergeht,
**dadurch gekennzeichnet,**
**dass** der Körperteil (12; 112) im Bereich zwischen dem ersten axialen Ende bzw. einem etwaigen dort vorgesehenen kreiszylindrischen Teil und dem Nietabschnitt (20; 120) mit einem zumindest im Wesentlichen konusförmigen Bereich (16; 116) versehen ist, der eine Anlagefläche für einen entsprechenden konusförmigen Bereich (42;142) eines Blechteils (40; 140) bildet und dass der kreiszylindrische Teil, falls vorhanden, an der Grenze (34; 134)zum konusförmigen Bereich einen Durchmesser aufweist, der nicht größer ist als der maximale Durchmesser des konusförmigen Bereichs und somit einen Ringflansch dort nicht bildet.

2. Funktionselement nach Anspruch 1,
**dadurch gekennzeichnet,**
**dass** Verdrehsicherungsmerkmale (38; 138) im Bereich der konusförmigen Fläche (16; 116) vorgesehen sind.

3. Funktionselement nach einem der vorhergehenden Ansprüche,
**dadurch gekennzeichnet,**
**dass** die axiale Länge der konusförmigen Fläche (16; 116) des konusförmigen Bereichs mindestens in etwa der doppelten Blechdicke entspricht und vorzugsweise etwa die vierfache Bleckdicke beträgt.

4. Funktionselement nach einem der vorhergehenden Ansprüche,
**dadurch gekennzeichnet,**
**dass** der eingeschlossene Konuswinkel (α) der konusförmigen Fläche des konusförmigen Bereichs im Bereich zwischen 60° und 150°, vorzugsweise im Bereich zwischen 70° und 140° und insbesondere zwischen 75° und 115° liegt und besonders bevorzugt etwa 90° beträgt.

5. Funktionselement nach einem der vorhergehenden Ansprüche,
**dadurch gekennzeichnet,**
**dass** die konusförmige Fläche (16; 116) des konusförmigen Bereichs über einen zylindrischen Halsteil (18; 118) in den Nietabschnitt (20; 120) übergeht.

6. Funktionselement nach Anspruch 5,
**dadurch gekennzeichnet,**
**dass** der Halsteil (18; 118) eine axiale Länge aufweist, welche mindestens in etwa der Blechdicke entspricht und vorzugsweise etwas größer als diese ist.

7. Funktionselement nach einem der Ansprüche 2 bis 6,
**dadurch gekennzeichnet,**
**dass** die Verdrehsicherungsmerkmale (38; 138) die Form von Nasen aufweisen, die an der konusförmigen Fläche (16; 116) vorgesehen sind.

8. Funktionselement nach Anspruch 7,
**dadurch gekennzeichnet,**
**dass** sich die Verdrehsicherungsnasen (38; 138) in axialen Ebenen erstrecken.

9. Funktionselement nach Anspruch 7 oder 8,
**dadurch gekennzeichnet,**
**dass** sich die Verdrehsicherungsnasen (38; 138) an der konusförmigen Fläche über zumindest im wesentlichen die axiale Länge des konusförmigen Bereichs (16; 116) erstrecken.

10. Funktionselement nach Anspruch 7,
**dadurch gekennzeichnet,**
**dass** die Verdrehsicherungsmerkmale die Form von in der konusförmigen Fläche vorgesehenen Vertiefungen aufweisen.

11. Funktionselement nach Anspruch 10,
**dadurch gekennzeichnet,**
**dass** die die Verdrehsicherungsmerkmale bildenden Vertiefungen in axialen Ebenen des Funktionselementes angeordnet sind.

12. Funktionselement nach einem der vorhergehenden Ansprüche,
**dadurch gekennzeichnet,**
**dass** die Stirnseite des Körperteils an seinem ersten axialen Ende, d.h. am dem Nietabschnitt abgewandten Ende des Körperteils oder die Stirnseite (39; 139) eines etwaigen dort vorhanden kreiszylindrischen Teils (14; 114) eine Auflagefläche für ein Bauteil bildet, das mittels des Funktionselements (10;110) am Blechteil (40; 140) zu befestigen ist.

13. Funktionselement nach Anspruch 12,
**dadurch gekennzeichnet,**
**dass** die axiale Dicke des kreiszylindrischen Teils (14) gewählt ist, um eine Abstandsfunktion zwischen dem Blechteil (40) und einem am Blechteil mittels des Funktionselements (10) angebrachten Bauteil zu realisieren.

14. Funktionselement nach einem der vorhergehenden Ansprüche,
**dadurch gekennzeichnet,**
**dass** es sich um ein Mutterelement (10) handelt, bei dem das Körperteil (12) mit einer mittleren Bohrung (26) vorgesehen ist.

15. Funktionselement nach einem der vorhergehenden Ansprüche 1 bis 13,
**dadurch gekennzeichnet,**
**dass** es sich um ein Bolzenelement (110) handelt mit einem Schaftteil (113), das auf der dem Nietabschnitt (120) abgewandten Seite des Körperteils (112) bzw. des kreiszylindrischen Teils (114) angeordnet ist.

16. Funktionselement nach einem der vorhergehenden Ansprüche,
**dadurch gekennzeichnet,**
**dass** mehrere Verdrehsicherungsnasen am konusförmigen Bereich des Funktionselements vorgesehen sind, sich vorzugsweise über die gesamte Länge des konusförmigen Bereichs in axialer Ebene erstrecken und vorzugsweise gleichmäßig um die Längsachse des Funktionselements verteilt sind.

17. Zusammenbauteil bestehend aus einem Funktionselement, wie Mutterelement (10) oder Bolzenelement (110), nach einem der Ansprüche 1 bis 16 und einem Blechteil (40),
**dadurch gekennzeichnet,**
**dass** ein konusförmiger Bereich (42; 142) des Blechteils in einem aus dem Nietabschnitt gebildeten Ringwulst (50;150) eingeklemmt ist und dass der konusförmige Bereich (42; 142) des Blechteils zumindest im Wesentlichen vollflächig am konusförmigen Bereich des Funktionselements anliegt.

18. Zusammenbauteil nach Anspruch 17,
**dadurch gekennzeichnet,**
**dass** Verdrehsicherungsmerkmale (38; 138) im Bereich der konusförmigen Fläche des Funktionselements vorgesehen sind und dass das Blechmaterial des Blechteils (40; 140) im konusförmigen Bereich (42; 142) formschlüssig mit den Verdrehsicherungsmerkmalen im Eingriff ist.

19. Zusammenbauteil nach Anspruch 17 oder 18,
**dadurch gekennzeichnet,**
**dass** die axiale Länge der konusförmigen Fläche (16; 116) mindestens in etwa der doppelten Blechdicke und vorzugsweise mindestens in etwa der vierfachen Bleckdicke entspricht.

20. Zusammenbauteil nach einem der vorhergehenden Ansprüche 17 bis 19,
**dadurch gekennzeichnet,**
**dass** der eingeschlossene Konuswinkel (α) der konusförmigen Fläche (16; 116) im Bereich zwischen 60° und 150°, vorzugsweise im Bereich zwischen 70° und 140° und insbesondere zwischen 75° und 115° liegt und besonders bevorzugt etwa 90° beträgt.

21. Zusammenbauteil nach einem der vorhergehenden Ansprüche 17 bis 20,
**dadurch gekennzeichnet,**
**dass** die konusförmige Fläche (16; 116) über einen zumindest im wesentlichen zylindrischen Halsteil (18; 118) in den Nietabschnitt (20; 120) übergeht.

22. Zusammenbauteil nach Anspruch 21,
**dadurch gekennzeichnet,**
**dass** der Halsteil (20; 120) eine axiale Länge aufweist, welche mindestens in etwa der Blechdicke entspricht und vorzugsweise etwas größer als diese ist.

23. Zusammenbauteil nach einem der vorhergehenden Ansprüche 17 bis 22,
**dadurch gekennzeichnet,**
**dass** es sich um ein Mutterelement (10) handelt, bei dem das Körperteil (12) mit einer mittleren Bohrung (26) vorgesehen ist.

24. Zusammenbauteil nach einem der Ansprüche 17 bis 23,
**dadurch gekennzeichnet,**
**dass** der Ringwulst (50) durch Verschiebung von Material des Nietabschnittes (20) gebildet ist.

25. Zusammenbauteil nach einem der Ansprüche 17 bis 23,
**dadurch gekennzeichnet,**
**dass** der Nietabschnitt (120) um den Rand (148) der Öffnung (144) des konusförmigen Bereiches (142) des Blechteils (140) zur Bildung des Ringwulstes bzw. eines Nietbördels umgebördelt ist.

26. Zusammenbauteil nach einem der Ansprüche 17 bis 22 oder 24 oder 25,
**dadurch gekennzeichnet,**
**dass** es sich bei dem Funktionselement um ein Bolzenelement handelt, das einen ein Gewinde aufweisenden Schaftteil (113) aufweist, der von dem Nietbördel abgewandten Ende des konusförmigen Bereichs des Körperteils (112) oder von einem etwaigen dort vorhandenen kreiszylindrischen Teil (114) oder von einem am dem Nietbördel abgewandeten Ende des konusförmigen Bereichs des Körperteils (112) oder am freien Stirnende eines dort vorgesehenen kreiszylindrischen Teils vorgesehenen Vorsprungs wegragt.

27. Zusammenbauteil nach Anspruch 26,
**dadurch gekennzeichnet,**
**dass** ein Mutterelement auf dem Gewinde des Schaftteils aufgeschraubt ist und einen sich radial erstreckenden Flansch aufweist, der an seiner Stirnseite, die dem Nietbördel abgewandt ist, eine Angriffsfläche für ein Schraubwerkzeug und um dieses herum eine ringförmige Fläche für einen Stößel eines Setzkopfes aufweist und an seiner dem Stirnende (139) des Bolzenelements bzw. der freien Stirnseite eines dort vorgesehenen kreiszylindrischen Teils (114) zugewandten Stirnseite (160) an der Stirnseite (139) anliegt und vorzugsweise im Durchmesser größer als diese Stirnseite (139) bemessen ist, d.h. diese überlappt.

28. Zusammenbauteil nach Anspruch 26 oder 27,
**dadurch gekennzeichnet,**
**dass** der Vorsprung eine Umfangsform hat, die als Verdrehsicherungsvorsprung für einen Kabelschuh dient.

29. Zusammenbauteil nach einem der Ansprüche 26 bis 28,
**dadurch gekennzeichnet,**
**dass** ein Kabelschuh sich zwischen dem Mutterelement (162) und dem Bolzenelement befindet.

30. Zusammenbauteil nach einem der Ansprüche 26 bis 28,
**dadurch gekennzeichnet,**
**dass** es mit einer Schutzbeschichtung versehen ist, nicht jedoch in einander berührenden Bereichen des Mutterelements und des Bolzenelements.

31. Zusammenbauteil nach einem der Ansprüche 17 bis 30,
**dadurch gekennzeichnet,**
**dass** der konusförmige Bereich (16; 116) des Funktionselements (10; 110) sich über zumindest im wesentlichen den ganzen Blechbereich (42; 142) erstreckt, der nach dem Vernieten des Funktionselements mit dem Blechteil in Berührung mit dem Funktionselement sich befindet.

## Claims

1. A functional element (10; 110) for attachment to a sheet metal part, such as for example a nut element (10) or a bolt element (110) having a body part (12; 112) or head part respectively which has at its first axial end, if required, a circularly cylindrical part (14; 114) and which merges at its other axial end into a cylindrical rivet section (20; 120),
**characterized in that**
the body part (12; 112) is provided in the region between the first axial end, or any circularly cylindrical part provided there, and the rivet section (20; 120), with an at least substantially conical region (16; 116) which forms a contact surface for a corresponding conical region (42; 142) of a sheet metal part (40; 140) and **in that** the circularly cylindrical part, if present, has a diameter at the boundary (34; 134) to the conical region which is not larger than the maximum diameter of the conical region and thus does not form a ring flange there.

2. A functional element in accordance with claim 1,
**characterized in that**
features (38; 138) providing security against rotation are provided in the region of the conical surface (16; 116).

3. A functional element in accordance with any one of the preceding claims,
**characterized in that**
the axial length of the conical surface (16; 116) of the conical region corresponds at least approximately to twice the sheet metal thickness and preferably to approximately four times the sheet metal thickness.

4. A functional element in accordance with any one of the preceding claims,
**characterized in that**
the enclosed cone angle (α) of the conical surface of the conical region lies in the range between 60° and 150°, preferably in the range between 70° and 140° and in particular between 75° and 115° and amounts particularly preferably to about 90°.

5. A functional element in accordance with any one of the preceding claims,
**characterized in that**
the conical surface (16; 116) of the conical region merges via a cylindrical neck part (18; 118) into the rivet section (20; 120).

6. A functional element in accordance with claim 5,
**characterized in that**
the neck part (18; 118) has an axial length which corresponds at least approximately to the sheet metal thickness and is preferably somewhat larger than this.

7. A functional element in accordance with any one of the claims 2 to 6,
**characterized in that**
the features (38; 138) providing security against rotation have the form of noses which are provided at the conical surface (16; 116).

8. A functional element in accordance with claim 7,
**characterized in that**
the noses (38; 138) providing security against rotation extend in axial planes.

9. A functional element in accordance with claim 7 or claim 8,
**characterized in that**
the noses (38; 138) providing security against rotation extend at the conical surface over at least substantially the axial length of the conical region.

10. A functional element in accordance with claim 7,
**characterized in that**
the features providing security against rotation have the form of recesses provided in the conical surface.

11. A functional element in accordance with claim 10,
**characterized in that**
the recesses forming the features providing security against rotation are arranged in axial planes of the functional element.

12. A functional element in accordance with any one of the preceding claims,
**characterized in that**
the end face of the body part at its first axial end, i.e. at the end of the body part remote from the rivet section, or at the end face (39; 139) of any circularly cylindrical part (14; 114) provided there, forms a support surface for a component which is to be secured by means of the functional element (10; 110) to the sheet metal part (40; 140).

13. A functional element in accordance with claim 12,
**characterized in that**
the axial thickness of the circularly cylindrical part (14) is selected in order to realize a spacer function between the sheet metal part (40) and a component attached to the sheet metal part by means of the functional element (10).

14. A functional element in accordance with any one of the preceding claims,
**characterized in that**
it is a nut element (10) in which the body part (12) is provided with a central bore (26).

15. A functional element in accordance with any one of the preceding claims 1 to 13,
**characterized in that**
it is a bolt element (110) with a shaft part (113) which is arranged at the side of the body part (112) or of the circularly cylindrical part (114) remote from the rivet section (120).

16. A functional element in accordance with any one of the preceding claims,
**characterized in that**
a plurality of noses providing security against rotation are provided at the conical region of the functional element, preferably extend over the full length of the conical region in an axial plane and are preferably uniformly distributed around the longitudinal axis of the functional element.

17. A component assembly comprising a functional element such as a nut element (10) or bolt element (110) in accordance with one of the claims 1 to 16 and a sheet metal part (40)
**characterized in that**
a conical region (42; 142) of the sheet metal part is trapped in a ring bead (50; 150) formed from the rivet section and **in that** the conical region (42; 142) of the sheet metal part contacts the conical region of the functional element at least substantially over its full area.

18. A component assembly in accordance with claim 17,
**characterized in that**
features (38; 138) providing security against rotation are provided in the region of the conical surface of the functional element and **in that** the sheet metal material of the sheet metal part (40; 140) in the conical region (42; 142) engages in form-fitted manner with the features providing security against rotation.

19. A component assembly in accordance with claim 17 or 18,
**characterized in that**
the axial length of the conical surface (16; 116) corresponds at least approximately to twice the sheet metal thickness and preferably to at least about four times the sheet metal thickness.

20. A component assembly in accordance with any one of the preceding claims 17 to 19,
**characterized in that**
the included cone angle (α) of the conical surface (16; 116) lies in the range between 60° and 150°, preferably in the range between 70° and 140° and in particular between 75° and 115° and particularly preferably amounts to about 90°.

21. A component assembly in accordance with any one of the preceding claims 17 to 20,
**characterized in that**
the conical surface (16; 116) merges via an at least substantially cylindrically neck part (18; 118) into the rivet section (20; 120).

22. A component assembly in accordance with claim 21,
**characterized in that**
the neck part (20; 120) has an axial length which corresponds at least approximately to the sheet metal thickness and is preferably somewhat larger than this.

23. A component assembly in accordance with any one of the preceding claims 17 to 22,
**characterized in that**
it is a nut element (10) in which the body part (12) is provided with a central bore (26).

24. A component assembly in accordance with any one of the claims 17 to 23,
**characterized in that**
the ring bead (50) is formed by displacement of material of the rivet section (20).

25. A component assembly in accordance with any one of the claims 17 to 23,
**characterized in that**
the rivet section (120) is beaded over around the edge (148) of the opening (144) of the conical region (142) of the sheet metal part (140) to form the ring bead, i.e. a rivet bead.

26. A component assembly in accordance with any one of the claims 17 to 22 or 24 or 25,
**characterized in that**
the functional element is a bolt element which has a shaft part (113) having a thread which projects away from the end of the conical region of the body part (112) remote from the rivet bead, or from any circularly cylindrical part (114) present there, or from a projection provided at an end of the conical region of the body part (112) remote from the rivet bead or at the free end of a circularly cylindrical part provided there.

27. A component assembly in accordance with claim 26,
**characterized in that**
a nut element is screwed onto the thread of the shaft part and has a radially extending flange which has, at its end face remote from the rivet bead, an engagement surface for a screwing tool and, around this, a ring-like surface for a plunger of a setting head and, at its end face (160) confronting the end face (139) of the bolt element, or at the free end of a circularly cylindrical part (114) provided there, contacts the end face (139) and is preferably dimensioned in diameter to be larger than this end face (139), i.e. overlaps it.

28. A component assembly in accordance with claim 26 or 27,
**characterized in that**
the projection has a peripheral shape which serves as a projection providing security against rotation for a cable shoe.

29. A component assembly in accordance with any one of the claims 26 to 28,
**characterized in that**
a cable shoe is located between the nut element (162) and the bolt element.

30. A component assembly in accordance with any one of the claims 26 to 28,
**characterized in that**
it is provided with a protective coating, not however in regions of the nut element and the bolt element which contact one another.

31. A component assembly in accordance with any one of the claims 17 to 30,
**characterized in that**
the conical region (16; 116) of the functional element (10; 110) extends over at least substantially the full sheet metal region (42; 142) which is in contact with the functional element after riveting of the functional element to the sheet metal part.

## Revendications

1. Elément fonctionnel (10 ; 110) pour le montage sur une pièce en tôle, tel que par exemple élément formant écrou (10) ou élément formant boulon (110) comprenant une partie de corps (12 ; 112) ou une partie de tête qui, si nécessaire, présente à sa première extrémité axiale une partie cylindrique circulaire (14 ; 114) et qui se transforme, à son autre extrémité axiale, en une portion cylindrique formant rivet (20 ; 120),
**caractérisé en ce que**
dans la zone entre la première extrémité axiale ou une partie cylindrique circulaire qui y est prévue éventuellement et la portion formant rivet (20 ; 120), la partie de corps (12 ; 112) est pourvue d'une zone (16 ; 116) au moins sensiblement conique qui constitue une surface d'appui pour une zone conique correspondante (42 ; 142) d'une pièce en tôle (40 ; 140), et **en ce que** la partie cylindrique circulaire, si présente, possède à la limite (34 ; 134) vers la zone conique, un diamètre qui n'est pas supérieur au diamètre maximal de la zone conique et qui ne constitue donc ici pas une bride annulaire.

2. Elément fonctionnel selon la revendication 1,
**caractérisé en ce que**
il est prévu des caractéristiques de blocage antirotation (38 ; 138) dans la zone de la surface conique (16 ; 116).

3. Elément fonctionnel selon l'une des revendications précédentes,
**caractérisé en ce que**
la longueur axiale de la surface conique (16 ; 116) de la zone conique est au moins approximativement le double de l'épaisseur de tôle et est de préférence approximativement quatre fois l'épaisseur de tôle.

4. Elément fonctionnel selon l'une des revendications précédentes,
**caractérisé en ce que**
l'angle de cône enfermé (α) de la surface conique de la zone conique est dans la plage comprise entre 60° et 150°, de préférence dans la plage comprise entre 70° et 140° et en particulier entre 75° et 115° et il est de préférence particulière d'environ 90°.

5. Elément fonctionnel selon l'une des revendications précédentes,
**caractérisé en ce que**
la surface conique (16 ; 116) de la zone conique se transforme en la portion formant rivet (20 ; 120) via une partie de col cylindrique (18 ; 118).

6. Elément fonctionnel selon la revendication 5,
**caractérisé en ce que**
la partie de col (18 ; 118) présente une longueur axiale qui correspond au moins approximativement à l'épaisseur de tôle et est de préférence plus grande que celle-ci.

7. Elément fonctionnel selon l'une des revendications 2 à 6,
**caractérisé en ce que**
les caractéristiques de blocage antirotation (38 ; 138) présentent la forme de becs qui sont prévus sur la surface conique (16 ; 116).

8. Elément fonctionnel selon la revendication 7,
**caractérisé en ce que**
les becs de blocage antirotation (38 ; 138) s'étendent dans des plans axiaux.

9. Elément fonctionnel selon la revendication 7 ou 8,
**caractérisé en ce que** les becs de blocage antirotation (38 ; 138) sur la surface conique s'étendent au moins sensiblement sur la longueur axiale de la zone conique (16 ; 116).

10. Elément fonctionnel selon la revendication 7,
**caractérisé en ce que**
les caractéristiques de blocage antirotation présentent la forme de renfoncements prévus dans la surface conique.

11. Elément fonctionnel selon la revendication 10,
**caractérisé en ce que**
les renfoncements constituant les caractéristiques de blocage antirotation sont ménagés dans des plans axiaux de l'élément fonctionnel.

12. Elément fonctionnel selon l'une des revendications précédentes,
**caractérisé en ce que**
à sa première extrémité axiale, c'est-à-dire à l'extrémité de la partie de corps détournée de la portion formant rivet, la face frontale de la partie de corps ou la face frontale (39 ; 139) d'une partie cylindrique circulaire (14 ; 114) qui y est prévue éventuellement constitue une surface d'appui pour un composant qui doit être fixé sur la pièce en tôle (40 ; 140) au moyen de l'élément fonctionnel.

13. Elément fonctionnel selon la revendication 12,
**caractérisé en ce que**
l'épaisseur axiale de la partie cylindrique circulaire (14) est choisie pour réaliser une fonction d'écartement entre la pièce en tôle (40) et un composant monté sur la pièce en tôle au moyen de l'élément fonctionnel (10).

14. Elément fonctionnel selon l'une des revendications précédentes,
**caractérisé en ce que**
il s'agit d'un élément formant écrou (10) dans lequel la partie de corps (12) est pourvu d'un perçage central (26).

15. Elément fonctionnel selon l'une des revendications précédentes 1 à 13,
**caractérisé en ce que**
il s'agit d'un élément formant boulon (110) muni d'une partie de tige (113) qui est agencée sur le côté de la partie de corps (112) ou de la partie cylindrique circulaire (114), qui est détourné de la portion formant rivet (120).

16. Elément fonctionnel selon l'une des revendications précédentes,
**caractérisé en ce que**
il est prévu plusieurs becs de blocage antirotation sur la zone conique de l'élément fonctionnel qui s'étendent de préférence sur toute la longueur de la zone conique dans le plan axial et de préférence de façon régulière autour de l'axe longitudinal de l'élément fonctionnel.

17. Composant d'assemblage constitué par un élément fonctionnel, tel qu'un élément formant écrou (10) ou un élément formant boulon (110) selon l'une des revendications 1 à 16 et par une pièce en tôle (40),
**caractérisé en ce que**
une zone conique (42 ; 142) de la pièce en tôle est serrée dans un bourrelet annulaire (50 ; 150) constitué par la portion formant rivet, et **en ce que** la zone conique (42 ; 142) de la pièce en tôle s'appuie au moins sensiblement par toute la surface contre la zone conique de l'élément fonctionnel.

18. Composant d'assemblage selon la revendication 17,
**caractérisé en ce que**
il est prévu des caractéristiques de blocage antirotation (38 ; 138) dans la zone de la surface conique de l'élément fonctionnel, et **en ce que** le matériau de tôle de la pièce en tôle (40 ; 140) dans la zone conique (42 ; 142) est en engagement par coopération de formes avec les caractéristiques de blocage antirotation.

19. Composant d'assemblage selon la revendication 17 ou 18,
**caractérisé en ce que**
la longueur axiale de la surface conique (16 ; 116) correspond au moins approximativement au double de l'épaisseur de tôle et est de préférence approximativement quatre fois l'épaisseur de tôle.

20. Composant d'assemblage selon l'une des revendications précédentes 17 à 19,
**caractérisé en ce que**
l'angle de cône enfermé (α) de la surface conique (16 ; 116) est dans la plage comprise entre 60° et 150°, de préférence dans la plage comprise entre 70° et 140° et en particulier entre 75° et 115° et il est de préférence particulière d'environ 90°.

21. Composant d'assemblage selon l'une des revendications précédentes 17 à 20,
**caractérisé en ce que**
la surface conique (16 ; 116) se transforme en la portion formant rivet (20 ; 120) via une partie de col au moins sensiblement cylindrique (18 ; 118).

22. Composant d'assemblage selon la revendication 21,
**caractérisé en ce que**
la partie de col (18 ; 118) présente une longueur axiale qui correspond au moins approximativement à l'épaisseur de tôle et est de préférence plus grande que celle-ci.

23. Composant d'assemblage selon l'une des revendications précédentes 17 à 22,
**caractérisé en ce que**
il s'agit d'un élément formant écrou (10) dans lequel la partie de corps (12) est pourvu d'un perçage central (26).

24. Composant d'assemblage selon l'une des revendications 17 à 23,
**caractérisé en ce que**
le bourrelet annulaire (50) est formé par déplacement du matériau de la portion formant rivet (20).

25. Composant d'assemblage selon l'une des caractéristiques 17 à 23,
**caractérisé en ce que**
la portion formant rivet (120) est rabattue autour du bord (148) de l'ouverture (144) de la zone conique (142) de la pièce en tôle (140) pour former le bourrelet annulaire ou un rabattement de rivetage.

26. Composant d'assemblage selon l'une des revendications 17 à 22 ou 24 ou 25,
**caractérisé en ce que**
l'élément fonctionnel est un élément formant boulon qui présente une partie de tige (113) munie d'un filetage qui fait saillie de l'extrémité, détournée du rabattement de rivetage, de la zone conique de la partie de corps (112) ou d'une partie cylindrique circulaire (14) qui y est éventuellement prévue ou d'une extrémité, détournée du rabattement de rivetage, de la zone conique de la partie de corps (112) ou de l'extrémité frontale libre d'une partie cylindrique circulaire d'une saillie qui y est prévue.

27. Composant d'assemblage selon la revendication 26,
**caractérisé en ce que**
un élément formant écrou est vissé sur le filetage de la partie de tige et présente une bride s'étendant radialement qui, sur sa face frontale détournée du rabattement de rivetage, présente une surface d'attaque pour un outil de vissage, et autour de celle-ci une surface annulaire pour un poinçon d'une tête de pose, et qui, sur sa face frontale (160) tournée vers l'extrémité frontale (139) de l'élément formant boulon ou vers la face frontale libre d'une partie cylindrique circulaire (114) qui y est prévue, prend appui contre la face frontale (139) et est dimensionnée de préférence avec un diamètre supérieur à celui de cette face frontale (139), c'est-à-dire qu'elle chevauche celle-ci.

28. Composant d'assemblage selon la revendication 26 ou 27,
**caractérisé en ce que**
la saillie présente une forme périphérique qui sert de saillie de blocage antirotation pour une cosse de câble.

29. Composant d'assemblage selon l'une des revendications 26 à 28,
**caractérisé en ce que**
une cosse de câble se trouve entre l'élément formant écrou (162) et l'élément formant boulon.

30. Composant d'assemblage selon l'une des revendications 26 à 28,
**caractérisé en ce que**
il est pourvu d'un revêtement protecteur, mais non pas dans des zones de l'élément formant écrou et de l'élément formant boulon qui se touchent mutuellement.

31. Composant d'assemblage selon l'une des revendications 17 à 30,
**caractérisé en ce que**
la zone conique (16 ; 116) de l'élément fonctionnel (10 ; 110) s'étend au moins sensiblement sur toute la zone de tôle (42 ; 142) qui, après le rivetage de l'élément fonctionnel avec la pièce en tôle, se trouve en contact avec l'élément fonctionnel.
